# EUROPÄISCHE PATENTSCHRIFT

(11) **EP 3 046 827 B1**
(45) Veröffentlichungstag und Bekanntmachung des Hinweises auf die Patenterteilung: **20.12.2017**
(21) Anmeldenummer: 14757918.9
(22) Anmeldetag: 28.08.2014
(51) Int. Cl.: B62D 21/11, B62D 27/02

(54) **FAHRZEUGKAROSSERIE MIT EINER UNTERBODENSTRUKTUR UND EINEM AN DIESER BEFESTIGTEN HILFSRAHMEN**
VEHICLE BODY HAVING AN UNDERBODY STRUCTURE AND AN AUXILIARY FRAME FASTENED THERETO
CARROSSERIE DE VÉHICULE POURVUE D'UNE STRUCTURE DE DESSOUS DE CAISSE ET D'UN FAUX-CHÂSSIS FIXÉ SUR CETTE DERNIÈRE

(30) Priorität: 18.09.2013 DE 102013218725
(43) Veröffentlichungstag der Anmeldung: 27.07.2016
(73) Patentinhaber: Bayerische Motoren Werke Aktiengesellschaft, 80809 München (DE)
(72) Erfinder: EPPELEIN, Ralph, 85375 Neufahrn (DE)
(86) Internationale Anmeldenummer: PCT/EP2014/068260
(87) Internationale Veröffentlichungsnummer: WO 2015/039847

(56) Entgegenhaltungen:
- WO-A2-97/12769
- DE-A1- 3 242 604
- DE-A1-102004 001 523

## Beschreibung

Die Erfindung betrifft eine Fahrzeugkarosserie mit einer Unterbodenstruktur und einem an dieser befestigten Hilfsrahmen, der Bestandteile einer Rad-Achse des Fahrzeugs trägt. Zum Stand der Technik wird neben der WO 00/66417 und der DE 10 2011 051 481 A1 insbesondere auf die DE 10 2004 001 523 A1 verwiesen. Letztere beschreibt eine Aufhängung zum Anbringen eines Bauteils in/an einer Fahrzeugkarosserie anhand der Verschraubung eines dort sog. Fahrschemels (= Achsträgers) am Heckboden des Fahrzeugs.

Zweispurige Kraftfahrzeuge weisen üblicherweise Achsträger (= Hilfsrahmen) auf, an denen die radführenden Lenker und/oder weitere Elemente der jeweiligen Fahrzeug-Achse befestigt sind. Maßgeblich für ein gutes Fahrverhalten des Fahrzeugs ist dabei eine exakte und definierte Radführung mit Realisierung spezieller kinematischer und elastokinematischer Größen. Bei modernen und hochwertigen Achsen wird ein Großteil der Entwicklungsarbeit in die möglichst gute Auflösung des Zielkonfliktes zwischen Fahr-Komfort und präziser Radführung gelegt. Ein wesentlicher Schritt ist dabei die akustische Isolierung der KörperschallÜbertragung zwischen den Rädern oder einem im Achsträger gelagerten Getriebe und der Karosserie über Gummilager (= Elastomerlager), vorzugsweise über eine mehrfach elastische Lagerung. Physikalisch stellt der Sprung von einer Struktur, bspw. der Unterbodenstruktur, zum Elastomermaterial des Gummilagers einen massiven Steifigkeitssprung dar und dieser große Impedanzsprung verursacht eine Körperschallreflexion, so dass nur ein geringer Schallenergieanteil weitergeleitet wird. Sowohl die radführenden Lenker sind mit abgestimmter Elastokinematik elastisch am Hilfsrahmen gelagert, als auch der Hilfsrahmen ist üblicherweise elastisch an der Unterbodenstruktur des Fahrzeugs elastisch gelagert, um die Körperschallübertragung zu reduzieren bzw. einen definierten Lasteintrag zu erhalten. Gemäß Stand der Technik sind diese Gummilager/Elastomerlager in Form von Gummi-Metall-Verbindungen zumeist verschraubt oder verpresst.

In jüngerer Zeit kommen vermehrt Faserverbundwerkstoffe zum Einsatz. Auch bei solchen Hilfsrahmen bspw. aus CFK wird die oben geschilderte Funktion der Gummilager benötigt. Dabei verursacht die Anbindung von Gummilagern (bspw. über Verschrauben oder Verpressen) eine punktuelle Krafteinleitung in die Struktur bzw. Unterbodenstruktur und eine direkte Verschraubung an oder auf einer Faserverbundmatrix ist wegen des Setzverhaltens zumeist nicht möglich. Üblicherweise verwendet man daher Inserts aus Metall, um Verschraubungen zu realisieren und die Krafteinleitung in die Faser zu ermöglichen; dabei führt die Anbindungs- bzw. Verbindungstechnik für die Gummilager zu technisch aufwändigen Konstruktionen.

Eine Abhilfemaßnahme für diese geschilderte Problematik aufzuzeigen, ist Aufgabe der vorliegenden Erfindung.
Die Lösung dieser Aufgabe ist für eine Fahrzeugkarosserie mit einer Unterbodenstruktur und einem an dieser befestigten Hilfsrahmen, der Bestandteile einer Rad-Achse des Fahrzeugs trägt, dadurch gekennzeichnet, dass der Hilfsrahmen ohne Zwischenschaltung von Elastomerlagern oder dgl. über mehrere Kleberaupen mit der Unterbodenstruktur verbunden ist, welche Kleberaupen nicht nur hinsichtlich einer den mechanischen Anforderungen genügenden Verbindung, sondern insbesondere hinsichtlich ihrer Dicke auch im Hinblick auf akustische Isolierung ausgelegt sind, und wobei der Hilfsrahmen auf einer unterhalb desselben vorgesehenen Sicherungsstruktur unter Zwischenlage einer akustischen Isolationsschicht abgestützt ist, welche Sicherungsstruktur kraftschlüssig oder stoffschlüssig mit der Unterbodenstruktur verbunden ist. Vorteilhafte Aus- und Weiterbildungen sind Inhalt der Unteransprüche.

Vorgeschlagen wird somit, einen Fahrwerks-Hilfsrahmen nicht mehr wie üblich über Gummilager oder dgl. mittels Schrauben an der Fzg.-Karosserie bzw. an deren Unterbodenstruktur zu befestigen, sondern diesen Hilfsrahmen mit der Unterbodenstruktur zu verkleben, wobei geeignete und dabei ausreichend dicke bzw. hohe - hinsichtlich eines Füge-Spalts zwischen dem Hilfsrahmen und der Unterbodenstruktur - Kleberaupen als Anhäufung eines geeigneten Klebstoffs vorgesehen sind, welche Kleberaupen nicht nur die mechanische Verbindung herstellen, sondern auch die akustische Isolierungs-Funktion der bislang üblichen Gummilager darstellen. Solche Kleberaupen können ähnlich den Kleberaupen für die Verklebung von Scheiben in Fahrzeugkarosserien ausgeführt sein, wobei auch ein ähnliches Klebstoffmaterial wie bei der Scheibenverklebung zum Einsatz kommen kann oder andere geeignete Klebstoffmaterialen. Als Beispiel für ein solches anderes Klebstoffmaterial sei dasjenige Klebstoffmaterial genannt, welches beim Serienfahrzeug der Patentanmelderin mit der Modellbezeichnung "i3" bei der Verklebung des sog. Drive-Moduls (= "Fahrgestell") mit dem sog. Life-Modul (= "Fzg.-Karosserie") zum Einsatz kommt. Erfindungsgemäß ist der Hilfsrahmen aber nicht alleinig durch Kleberaupen zwischen dem Hilfsrahmen und der Unterbodenstruktur befestigt, sondern es ist eine zusätzliche Sicherungsstruktur vorgesehen, auf welcher der Hilfsrahmen nach unten hin, d.h. mit seiner Schwerkraft anteilig - nämlich zusätzlich zu den bislang genannten Kleberaupen - unter Zwischenlage einer akustischen Isolationsschicht, welche im übrigen gleichfalls in Form einer oder mehrerer solcher Kleberraupe(n) ausgeführt sein kann, abgestützt ist. Aus Sicherheitsgründen ist diese Sicherungsstruktur stoffschlüssig (bspw. durch Verschweißen) und/oder kraftschlüssig (vorzugsweise über Schraubverbindungen) an der Unterbodenstruktur der Fzg.-Karosserie befestigt.

In diesem Zusammenhang sei ausdrücklich darauf hingewiesen, dass die vorliegende Erfindung keinesfalls auf den Einsatz von faserverstärkten Kunststoffen für die Karosserie bzw. Unterbodenstruktur und/oder den Hilfsrahmen beschränkt ist; vielmehr kann jedes dieser Bauteile bzw. Bestandteile auch in geeigneten metallischen Werkstoffen ausgeführt sein. Gegebenenfalls ist auch Mischbauweise der einzelnen Bestandteile möglich, derart, dass zumindest eine der Kontaktflächen des Hilfsrahmens oder der Unterbodenstruktur mit einer Kleberaupe in faserverstärktem Kunststoff ausgeführt ist.

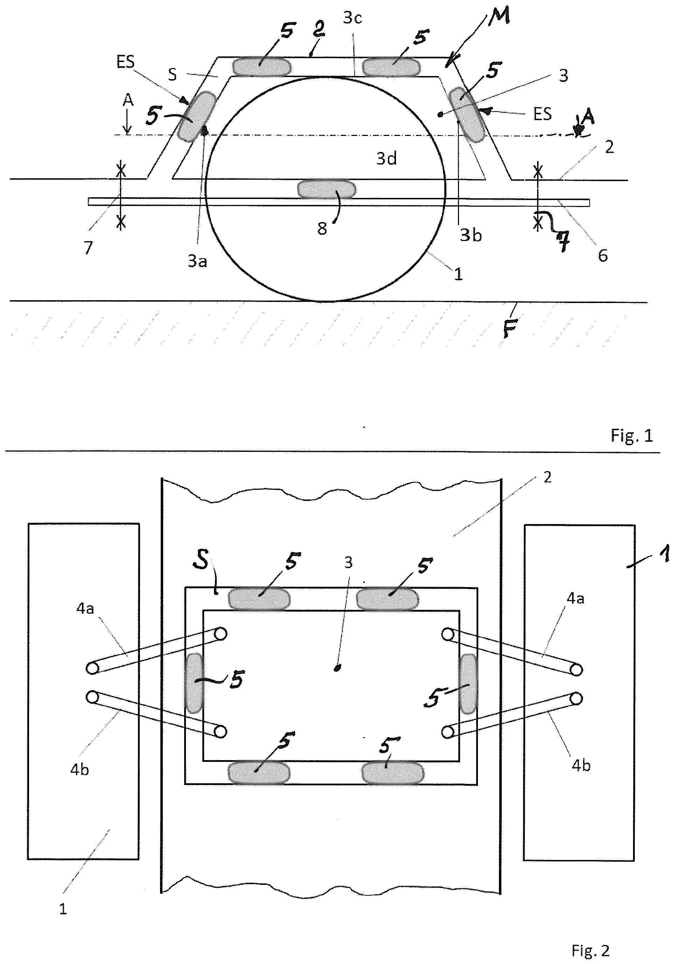

Die weiteren auch in Patentansprüchen vorgeschlagenen Merkmale lassen sich am besten anhand der beiden beigefügten Prinzipskizzen erläutern, in denen auf das wesentliche abstrahiert eine erfindungsgemäße Unterbodenstruktur einer Fzg.-Karosserie mit daran befestigtem Hilfsrahmen dargestellt ist. Dabei zeigt Fig.1 einen Schnitt in einer parallel zur Fahrzeuglängsachse verlaufenden Vertikalebene und **Fig.2** den Schnitt A-A aus Fig.1 (und somit einen Schnitt in einer Horizontalebene).

Mit der Bezugsziffer 1 ist ein Rad des Fahrzeugs gekennzeichnet, von welchem Fahrzeug weiterhin ein Teil der Unterbodenstruktur 2 im Bereich dieses Rades, welche ihrerseits Bestandteil der Fahrzeug-Karosserie ist, sowie ein auch als Achsträger 3 bezeichneter Hilfsrahmen 3 dargestellt ist. Wie Fig.2 zeigt sind am Hilfsrahmen 3 hier nur figürlich dargestellt jeweils zwei Lenker 4a, 4b angelenkt, die mit ihrem jeweils anderen Ende das Rad 1 wie üblich über einen nicht dargestellten Radträger führen.

Wie aus Fig.1 hervorgeht ist die Unterbodenstruktur 2 im Aufnahmebereich des Hilfsrahmens 3 muldenartig und mit Einführschrägen ES für denselben gestaltet, d.h. die Unterbodenstruktur 2 bildet eine nach unten (zur Fahrbahn F) hin offene Mulde M, in welche der Hilfsrahmen 3 von unten, d.h. von der Fahrbahn F her eingesetzt ist. Dessen seitliche Struktur bzw. dessen Wände 3a, 3b sind an die Einführschrägen ES der Unterbodenstruktur 2 angepasst und der in Fig.1 obere hier horizontale Boden 3c des Hilfsrahmens 3 ist an den horizontalen Boden der Mulde M angepasst, derart, dass im komplett eingesetzten Zustand ein geringer Füge-Spalt S zwischen den Wänden 3a, 3b und dem oberen Boden 3c des vorliegend stark abstrahiert einen Pyramidenstumpf mit einem jeweils rechteckigen unteren (3d) und oberen Boden 3c beschreibenden Hilfsrahmens 3 und der Mulde M in der Unterbodenstruktur 2 vorliegt. In diesem Füge-Spalt S befinden sich abschnittsweise mehrere Kleberaupen 5 aus einem Klebstoff, über den bzw. über die der Hilfsrahmen 3 mit der Unterbodenstruktur 2 durch Kleben verbunden ist. Diese Kleberaupen 5 sind nicht nur hinsichtlich einer den mechanischen Anforderungen genügenden Verbindung, sondern insbesondere hinsichtlich ihrer Dicke - und somit der Höhe des Füge-Spalts S - auch im Hinblick auf akustische Isolierung zwischen dem Hilfsrahmen 3 und der Unterbodenstruktur 2 ausgelegt.
Zusätzlich zu dieser Klebeverbindung über die soweit erläuterten Kleberaupen 5 ist der Hilfsrahmen 3 auf einer unterhalb desselben vorgesehenen Sicherungsstruktur 6 unter Zwischenlage einer akustischen Isolationsschicht 8 abgestützt ist, welche Sicherungsstruktur 6 hier kraftschlüssig, nämlich über mehrere nur abstrakt dargestellte Schraubverbindungen 7 mit der Unterbodenstruktur 2 verbunden ist. Diese vorliegend in Form eines flächigen Bleches oder dgl. ausgeführte Sicherungsstruktur 6 stellt quasi einen Deckel für die Aufnahme-Mulde M der Unterbodenstruktur 2 dar.

Grundsätzlich wird vorliegend für ein Fahrzeug die Verbindung zweier oder auch mehrerer Strukturbauteile in Form zumindest einer Unterbodenstruktur 2 und eines Achsträgers bzw. Hilfsrahmens 3 über einen weichen Klebstoff vorgeschlagen, wobei die miteinander verklebten Abschnitt der besagten Strukturen und das Klebestoffmaterial zusammen quasi ein Gummilager bilden, jedenfalls hinsichtlich der akustischen Isolation zwischen dem Hilfsrahmen 3 und der Unterbodenstruktur 2. Durch die Form und geeignete Anordnung der Kleberaupen 5 können die geforderten Steifigkeiten in sämtlichen Koordinatenrichtungen als auch die geforderten Verdrehsteifigkeiten dargestellt werden. Zusätzlich ist eine sicherheitsrelevante Abstützung über die Sicherungsstruktur 6 gewährleistet, welche selbstverständlich auch bügelartig oder anderweitig gestaltet sein kann. Überhaupt sind in einer realen Konstruktion eine Vielzahl von Details abweichend von der Figurendarstellung gestaltet, ohne den Inhalt der Patentansprüche zu verlassen. Die im folgenden genannten Vorteile ergeben sich jedoch stets mit Umsetzung der wesentlichen Merkmale, nämlich der Entfall von ansonsten benötigten Gummilagern, eine großflächige Krafteinleitung insbesondere in Faserverbundstrukturen, keine aufwändigen Verbindungselemente, eine Gewichtsreduzierung sowie die Möglichkeit der Darstellung von quasi "Gummilager-Varianten" durch modifizierte Kleberaupen, Klebstoff-Eigenschaften und Füge-Spalte S.

## Patentansprüche

1. Fahrzeugkarosserie mit einer Unterbodenstruktur (2) und einem an dieser befestigten Hilfsrahmen (3), der Bestandteile einer Rad-Achse des Fahrzeugs trägt,
**dadurch gekennzeichnet, dass** der Hilfsrahmen (3) ohne Zwischenschaltung von Elastomerlagern oder dgl. über mehrere Kleberaupen (5) mit der Unterbodenstruktur (2) verbunden ist, welche Kleberaupen (5) nicht nur hinsichtlich einer den mechanischen Anforderungen genügenden Verbindung, sondern insbesondere hinsichtlich ihrer Dicke auch im Hinblick auf akustische Isolierung ausgelegt sind, und dass der Hilfsrahmen (3) auf einer unterhalb desselben vorgesehenen Sicherungsstruktur (6) unter Zwischenlage einer akustischen Isolationsschicht (8) abgestützt ist, welche Sicherungsstruktur kraftschlüssig oder stoffschlüssig mit der Unterbodenstruktur (2) verbunden ist

2. Fahrzeugkarosserie nach Anspruch 1, wobei die Unterbodenstruktur (2) im Aufnahmebereich des Hilfsrahmens (3) muldenartig mit Einführschrägen (ES) für denselben gestaltet ist.

3. Fahrzeugkarosserie nach Anspruch 2, wobei die Sicherungsstruktur (6) quasi einen Deckel für die Aufnahme-Mulde (M) der Unterbodenstruktur (2) darstellt.

4. Fahrzeugkarosserie nach einem der vorangegangenen Ansprüche, wobei die akustische Isolationsschicht (8) zwischen dem Hilfsrahmen (3) und der Sicherungsstruktur (6) in Form zumindest einer Kleberaupe ausgeführt ist.

5. Fahrzeugkarosserie nach einem der vorangegangenen Ansprüche, wobei zumindest eine der Kontaktflächen des Hilfsrahmens (3) oder der Unterbodenstruktur (2) mit einer Kleberaupe (5) in faserverstärktem Kunststoff ausgeführt ist.

## Claims

1. A vehicle body having an underbody structure (2) and an auxiliary frame (3) fastened thereto, which auxiliary frame supports the components of a wheel axle of the vehicle,
**characterised in that** the auxiliary frame (3) is connected to the underbody structure (2) by means of a plurality of adhesive beads (5) without interpositioning of elastomer bearings or the like, which adhesive beads (5) are configured not only to provide a connection satisfying mechanical requirements, but also to satisfy acoustic insulation requirements more especially in respect of their thickness, and **in that** the auxiliary frame (3) is supported on a securing structure (6) provided below the auxiliary frame, with interpositioning of an acoustic insulating layer (8), which securing structure is connected to the underbody structure (2) in a frictionally engaged or integrally bonded manner.

2. A vehicle body according to claim 1, wherein the underbody structure (2) is designed in the receiving region of the auxiliary frame (3) in a trough-like manner with insertion slopes (ES) for said frame.

3. A vehicle body according to claim 2, wherein the securing structure (6) constitutes a cover so to speak for the receiving trough (M) of the underbody structure (2).

4. A vehicle body according to any one of the preceding claims, wherein the acoustic insulating layer (8) is embodied in the form of at least one adhesive bead between the auxiliary frame (3) and the securing structure (6).

5. A vehicle body according to any one of the preceding claims, wherein at least one of the contact surfaces of the auxiliary frame (3) or of the underbody structure (2) is embodied with an adhesive bead (5) made of fibre-reinforced plastic.

## Revendications

1. Carrosserie de véhicule comprenant une structure de dessous de caisse (2) et un châssis auxiliaire (3) fixé à celle-ci qui porte des composants d'un essieu de roue de véhicule,
**caractérisée en ce que**
le châssis auxiliaire (3) est relié à la structure de dessous de caisse (2) sans interposition de paliers élastomères ou similaire par l'intermédiaire de plusieurs cordons de colle (5) réalisés non seulement pour obtenir une liaison suffisante du point de vue des exigences mécaniques, en particulier concernant leur épaisseur, mais également pour obtenir une isolation acoustique, et, le châssis auxiliaire (3) s'appuie sur une structure de protection (8) située au-dessous de celui-ci avec interposition d'une couche d'isolation acoustique (8), cette structure de protection étant reliée à la structure de dessous de caisse (2) par une liaison par la force ou par une liaison par la matière.

2. Carrosserie de véhicule conforme à la revendication 1,
dans laquelle la structure de dessous de caisse (2) est réalisée en forme d'auge, dans la zone de réception du châssis auxiliaire (3) avec des biseaux d'introduction de celui-ci (ES).

3. Carrosserie de véhicule conforme à la revendication 2,
dans laquelle la structure de protection (6) constitue quasiment un couvercle pour l'auge de réception (M) de la structure de dessous de caisse (2).

4. Carrosserie de véhicule conforme à l'une des revendications précédentes,
dans laquelle la couche d'isolation acoustique (8) est réalisée sous la forme d'au moins un cordon de colle entre le châssis auxiliaire (3) et la structure de protection (6).

5. Carrosserie de véhicule conforme à l'une des revendications précédentes,
dans laquelle au moins l'une des surfaces de contact du châssis auxiliaire (3) ou de la structure de dessous de caisse (2) est réalisée avec un cordon de colle (5) en un matériau synthétique renforcé par des fibres.
